# EUROPÄISCHE PATENTANMELDUNG

(11) **EP 0 744 815 A2**
(43) Veröffentlichungstag der Anmeldung: **27.11.1996**
(21) Anmeldenummer: 96107599.1
(22) Anmeldetag: 13.05.1996
(51) Int. Cl.: H02K 41/02

(54) **Translatorischer Direktantrieb**

(30) Priorität: 24.05.1995 DE 19519090
(71) Anmelder: SIEMENS AKTIENGESELLSCHAFT, 80333 München (DE)
(72) Erfinder: Wacker, Josef, Dipl.-Ing.(FH), 82335 Berg (DE)

(57) **Zusammenfassung**

Der translatorische Direktantrieb ist mit einem aus Primärteil (P) und Sekundärteil (S) bestehenden Linearmotor ausgerüstet, wobei das Primärteil (P) ein Spulensystem enthält, wobei das Sekundärteil (S) auf einem ring- oder polygonförmigen Träger (T) angeordnete Permanentmagnete (PM) umfaßt, und wobei das Primärteil (P) mit Hilfe einer Linear-Führung (LF) relativ zum Sekundärteil (S) verfahrbar ist. Die Permanentmagnete (PM) sind auf dem Träger (T) so angeordnet, daß sich die magnetischen Anziehungskräfte (A) nach außen hin aufheben. Die mechanische Verbindung von Primärteil (P) und Linear-Führung (LF) erfolgt durch einen Haltearm (HA), der durch einen Spalt (SP) des Trägers (T) nach außen ragt. Bei einer Variante sind auf den Träger (T) anstelle der Permanentmagnete (PM) entsprechende Weicheisen-Führungsteile angeordnet. Durch die Aufhebung der magnetischen Anziehungskräfte (A) können lineare Direktantriebe und insbesondere Positionierantriebe realisiert werden, die bei leichter und kompakter Bauweise hohe Schubkräfte ermöglichen.

## Beschreibung

Bei konventionellen elektrischen Linearantrieben im Maschinen- und Anlagenbau werden die gewünschten Linearbewegungen in der Regel durch rotatorische Motoren und angekoppelte mechanische Übertragungsglieder erzeugt. Durch systembedingte Nachteile derartiger Antriebe wie Spiel, Elastizität und Reibung, können die ständig steigenden Forderungen an die erreichbare Regeldynamik, die Positioniergenauigkeit, das Beschleunigungsvermögen, die Verfahrgeschwindigkeit und den Verfahrweg nur noch bedingt erfüllt werden.

Translatorische Direktantriebe mit Linearmotoren vermeiden die Nachteile mechanischer Übertragungsglieder und ermöglichen trägheitsarme, mechanisch steife und spielfreie Verfahrbewegungen mit hohen Positioniergenauigkeiten (vgl. DE-Z wt Werkstattstechnik 79/1989, S. 647 bis 650; DE-Z antriebstechnik 31/1992, Nr. 4, S. 32 bis 42; DE-Z Elektronik 15/1992, S. 48 bis 54).

Bei den beispielsweise für Lineartische, Kreuztische und X-Y-Portale eingesetzten translatorischen Direktantrieben, können verschiedene Typen von Linearmotoren verwendet werden. Die sogenannten Einzelkamm-Linearmotoren bestehen aus einem Primärteil mit Blechpaket und Drehstromwicklung und einem Sekundärteil mit Kurzschlußkäfig und Eisenkern. Die zwischen Primärteil und Sekundärteil wirkende magnetische Anziehungskraft wird von der zugehörigen Linear-Führung bzw. dem zugehörigen Linear-Führungssystem aufgenommen. Bei den sogenannten Doppelkamm-Linearmotoren befindet sich das Sekundärteil zwischen zwei sich gegenüberstehenden Primärteilen. Auf die beiden Primärteile wirkt eine magnetische Anziehungskraft wie beim Einzelkamm-Linearmotor, d.h. nach außen hin heben sich die magnetischen Anziehungskräfte auf. Mit der aktiven Eisenfläche verdoppelt sich beim Doppelkamm-Linearmotor gegenüber dem Einzelkamm-Linearmotor auch die Schubkraft.

Neben den vorstehend geschilderten Einzelkamm- und Doppelkamm-Linearmotoren sind auch bereits Linearmotoren bekannt, deren beweglich angeordneter Primärteil ein Spulensystem enthält, und deren ortsfestes Sekundärteil auf einem U-förmigen Träger angeordnete Permanentmagnete umfaßt. Bei den auf den beiden freien Schenkein des U-förmigen Trägers angeordneten Permanentmagneten heben sich die magnetischen Anziehungskräfte auf, während die magnetischen Anziehungskräfte der auf dem Quersteg des U-förmigen Trägers angeordneten Permanentmagnete von der zugeordneten Linear-Führung bzw. dem zugeordneten Linear-Führungssystem aufgenommen werden. Die Aufnahme dieser magnetischen Anziehungskräfte erfolgt beispielsweise durch integrierte Luftlager.

Ferner ist aus der DE-A-29 12 531 ein auf zwei parallelen zylindrischen Stangen geführter Linearmotor mit zwei ringförmige Spulensystemen bekannt, die auf den die beiden Stangen umschließen und auf diesen geführt sind. Auf einem rohrartigen Träger einander diametral gegenüberliegend angeordneten schalenförmigen Permanentmagnete umfassen die Spulen und sind relativ zu diesen verfahrbar, wobei sich die magnetischen Anziehungskräfte weitgehend aufheben. Die Träger weisen einen in Längsrichtung verlaufenden Spalt auf, durch den ein die beiden Spulensysteme verbindender Steg hindurchragt.

Da die Führungsstangen von den Spulensystemen vollkommen umschlossen sind, können sie nur an ihren beiden Enden an einer Tragkonstruktion gelagert werden. Die Länge der Stangen muß mindestens die Länge des Spulensystems plus die Hublänge erreichen. Transversal einwirkende Kräfte können daher zu seitlichen elastischen Auslenkungen führen, die einen derartigen Linearmotor für den Einsatz z.B. in Bestückautomaten für elekrische Bauelemente mit großen Verfahrwegen und hoher Positioniergenauigkeit ungeeignet erscheinen lassen.

Der im Anspruch 1 angegebenen Erfindung liegt das Problem zugrunde, einen insbesondere als Positionierantrieb geeigneten translatorischen Direktantrieb zu schaffen, der einfach, leicht und kompakt aufgebaut ist und einen hohen Wirkungsgrad bei der Umsetzung von elektrischer in mechanischer Energie ermöglicht.

Der Erfindung liegt die Erkenntnis zugrunde, daß die Aufhebung der magnetischen Anziehungskräfte nach außen nicht auf die symmetrische Anordnung des Doppelkamm-Linearmotors beschränkt ist. Durch die Verwendung eines polygonförmigen Träers können die Permanentmagnete so angeordnet werden, daß sich auch bei mehr als zwei Permanentmagnet-Reihen deren magetische Anziehungskräfte nach außen hin aufheben. Voraussetzung hierfür ist, daß der polygonförmige Träger einen in Längsrichtung verlaufenden Spalt aufweist, durch welchen das Sekundärteil über einen Haltearm oder mehrere Haltearme mit einer Linear-Führung verbunden werden kann.

Die Anordnung des Spaltes in einem Eckbereich des polygonförmigen Trägers ermöglicht eine symmetrische Anordnung der Permanentmagnete bzw. Weicheisen-Führungsteile und damit eine vollständige Aufhebung der magnetischen Anziehungskräfte nach außen.Durch die Neutralisierung der magnetischen Anziehungskräfte können bei leichter und kompakter Bauweise des translatorischen Direktantriebes mit geringen zu bewegenden Massen hohe Schubkräfte realisiert werden.

Nach Anspruch 2 kann das erfindungsgemäße Prinzip auch bei Linearmotoren realisiert werden, bei welchen der ring- oder polygonförmige Träger nicht mit Permanentmagneten, sondern mit entsprechenden Weicheisen-Führungsteilen bestückt ist. In diesem Fall enthält das Primärteil neben dem Spulensystem auch Permanentmagnete.

Vorteilhafte Ausgestaltungen der Erfindung sind in den Unteransprüchen angegeben.

Gemäß den Ansprüchen 3 und 4 können die magnetischen Anziehungskräfte auf besonders einfache Weis durch paarweise auf dem Träger einander gegenüberliegende Permanentmagnete bzw. Weicheisen-Führungsteile aufgehoben werden.

Ausführungsbeispiele der Erfindung sind in der Zeichnung dargestellt und werden im folgenden näher beschrieben.

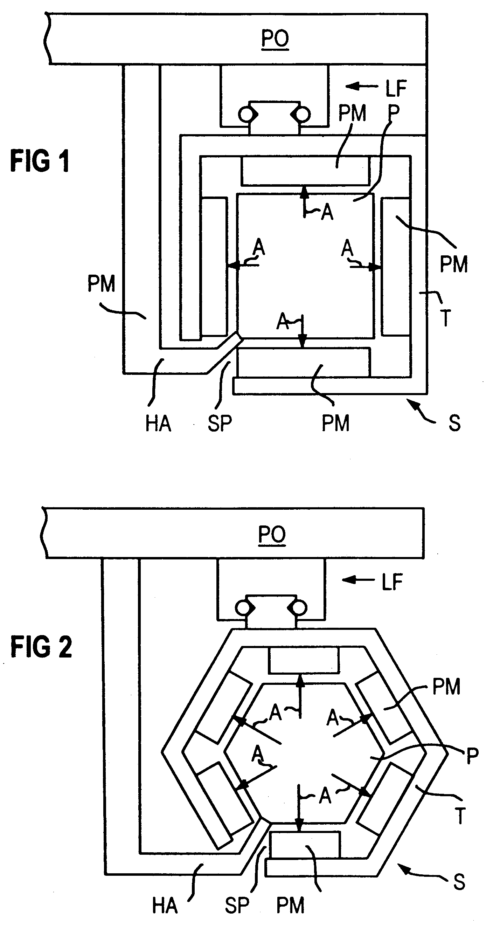

Es zeigen
- Figur 1: einen linearen Positionierantrieb mit einem im Querschnitt quadratischen Träger des Sekundärteils des Linearmotors, der mit vier Reihen sich paarweise einanander gegenüberliegender Permanentmagnete bestückt ist und
- Fgiur 2: einen linearen Positionierantrieb mit einem im Querschnitt sechseckförmigen Träger des Sekundärteils des Linearmotors, der mit sechs Reihen sich paarweise einanander gegenüberliegender Permanentmagnete bestückt ist.

Figur 1 zeigt in stark vereinfachter schematischer Darstellung ein erstes Ausführungsbeispiel eines linearen Positionierantriebes insbesondere für einen Bestückkopf eines Automaten zur Bestückung von Leiterplatten mit elektrischen Bauelementen. Ein Linearmotor des Positionierantriebes besteht aus einem mit P bezeichneten Primärteil und einem mit S bezeichneten Sekundärteil. Das im Querschnitt quadratische Primärteil P enthält ein nicht näher erkennbares Spulensystem, während das Sekundärteil S einen im Querschnitt quadratischen Träger T aus Stahl besitzt, dessen vier Innenflächen jeweils mit einer Reihe von Permanentmagneten PM bestückt sind. Es ist zu erkennen, daß die quadratische Querschnittsform des Trägers T nicht ringförmig geschlossen, sondern im Bereich einer Ecke mit einem in Längsrichtung senkrecht zur Zeichnungsebene verlaufenden Spalt SP versehen ist.

Durch diesen Spalt SP ragt ein sich ebenfalls in Längsrichtung senkrecht zur Zeichnungsebene erstreckender Haltearm HA des Sekundärteils S nach außen. Außerdem sind im Bereich des Spaltes SP die elektrischen Zuleitungen für das Spulensystem des Primärteils P nach außen geführt, was jedoch in der Zeichnung nicht näher dargestellt ist. Der zweifach abgebogene Haltearm HA überträgt die lineare Antriebsbewegung des Sekundärteils S auf ein Portal PO, welches seinerseits über eine Linear-Führung LF auf dem Träger T in Längsrichtung verfahrbar ist.

Das in Figur 1 abgebrochen dargestellte Portal PO ist auf seiner in Querrichtung gegenüberliegenden Seite auf der Linearführung eines elektrisch und mechanisch parallelgeschalteten linearen Positionierantriebes geführt, der zu dem dargestellten linearen Positionierantrieb spiegelsymmetrisch ausgebildet ist. Das Portal PO ist für die Aufnahme eines Bestückkopfes für SMD-Bauelemente vorgesehen, wobei dieser Bestückkopf in Querrichtung, d.h. senkrecht zur Verfahrrichtung der Linear-Führung LF verfahrbar angeordnet ist. Auch für diese Verstellbewegung des Bestückkopfes wird vorzugsweise ein linearer Positionierantrieb verwendet.

Die zwischen den einzelnen Permanentmagneten PM und dem Primärteil P wirkenden magnetischen Anziehungskräfte sind mit A bezeichnet. Es ist zu erkennen, daß diese magnetischen Anziehungskräfte A sich durch die paarweise einander gegenüberliegende Anordnung der Permanentmagnete PM auf dem Träger T nach außen hin aufheben. Hierdurch wird eine leichte und kompakte Bauweise des Primärantriebes mit geringen bewegten Massen und hohen Schubkräften ermöglicht.

Figur 2 zeigt in stark vereinfachter schematischer Darstellung ein zweites Ausführungsbeispiel eines linearen Positionierantriebes. Im Unterschied zu dem in Figur 1 dargestellten Ausführungsbeispiel besitzten hier das Primärteil P und der Träger T des Sekundärteils S sechseckige Querschnittsformen. Es ist zu erkennen, daß auf der Innenfläche des sechseckförmigen Trägers T drei Paare von Permanentmagneten PM jeweils einander gegenüberliegend angeordnet sind. Auch hier heben sich die magnetischen Anziehungskräfte A nach außen hin auf.

Neben den dargestellten Ausführungsbeispielen mit vier bzw. sechs Reihen von Permanentmagneten auf der Innenseite eines polygonförmigen Trägers können auch andere Bauformen realisiert werden, bei welchen sich die magnetischen Anziehungskräfte nach außen hin aufheben. Entsprechend symmetrische Anordnungen von Permanentmagneten können beispielsweise auch bei drei oder fünf Reihen von Permanentmagneten verwirklicht werden.

Das in der Zeichnung dargestellte Prinzip kann auch so variiert werden, daß auf dem ring- oder polygonförmigen Träger anstelle der Permanentmagnete Weicheisen-Führungsteile angeordnet werden. In diesem Fall werden dann die erforderlichen Permanentmagnete zusammen mit dem Spulensystem in das Primärteil integriert.

## Patentansprüche

1. Translatorischer Direktantrieb, insbesondere Positionierantrieb, mit einem aus Primärteil (P) und Sekundärteil (S) bestehenden Linearmotor, wobei
- das Primärteil (P) ein Spulensystem enthält,
- das Sekundärteil (S) auf einem Träger (T) angeordnete Permanentmagnete (PM) umfaßt, und wobei
- das Primärteil (P) mit Hilfe mindestens einer Linear-Führung (LF) relativ zum Sekundärteil (S) verfahrbar ist,
**dadurch gekennzeichnet**, daß
- der im Querschnitt polygonförmige Träger (T) derart mit Permanentmagneten (PM) bestückt ist, daß sich die magnetischen Anziehungskräfte (A) nach außen hin zumindest weitgehend aufheben, und daß
- der Träger (T) einen in einem Eckbereich einen in Längsrichtung verlaufenden Spalt (SP) aufweist, durch welchen mindestens ein mit der Linear-Führung (LF) verbundener Haltearm (HA) des Sekundärteils (S) nach außen ragt.

2. Translatorischer Direktantrieb, insbesondere Positionierantrieb, mit einem aus Primärteil (P) und Sekundärteil (S) bestehenden Linearmotor, wobei
- das Primärteil (P) ein Spulensystem und Permanentmagnete enthält,
- das Sekundärteil (S) auf einem Träger (T) angeordnete Weicheisen-Führungsteile umfaßt, und wobei
- das Primärteil (P) mit Hilfe mindestens einer Linear-Führung (LF) relativ zum Sekundärteil (S) verfahrbar ist,
**dadurch gekennzeichnet**, daß
- der im Querschnitt polygonförmige Träger (T) derart mit Weicheisen-Führungsteilen bestückt ist, daß sich die magnetischen Anziehungskräfte (A) nach außen hin zumindest weitgehend aufheben, und daß
- der Träger (T) in einem Eckbereich einen in Längsrichtung verlaufenden Spalt (SP) aufweist, durch welchen mindestens ein mit der Linear- Führung (LF) verbundener Haltearm (HA) des Sekundärteils (S) nach außen ragt.

3. Translatorischer Direktantrieb nach Anspruch 1,
**dadurch gekennzeichnet**,
daß sich die Permanentmagnete (PM) auf dem Träger (T) paarweise einander gegenüberliegen.

4. Translatorischer Direktantrieb nach Anspruch 2,
**dadurch gekennzeichnet**,
daß sich die Weicheisen-Führungsteile auf dem Träger (T) paarweise einander gegenüberliegen.
